(19) Europäisches Patentamt
European Patent Office
Office européen des brevets

(11) **EP 2 272 614 B1**

(12) **EUROPEAN PATENT SPECIFICATION**

(45) Date of publication and mention
of the grant of the patent:
**06.11.2013 Bulletin 2013/45**

(51) Int Cl.:
***B23H 7/06*** *(2006.01)*      ***B23H 7/20*** *(2006.01)*

(21) Application number: **10167674.0**

(22) Date of filing: **29.06.2010**

(54) **Controller for wire cut electric discharge machine**

Steuerung für eine elektrische Drahterodiermaschine

Contrôleur de machine à décharge électrique de coupe-pâte

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **10.07.2009 JP 2009163887**

(43) Date of publication of application:
**12.01.2011 Bulletin 2011/02**

(73) Proprietor: **FANUC CORPORATION
Oshino-mura
Minamitsuru-gun
Yamanashi 401-0597 (JP)**

(72) Inventors:
• **Yoshida, Masayuki
Minamitsuru-gun Yamanashi 401-0597 (JP)**
• **Hiraga, Kaoru
Minamitsuru-gun Yamanashi 401-0597 (JP)**

(74) Representative: **Ward, James Norman
Haseltine Lake LLP
Lincoln House, 5th Floor
300 High Holborn
London WC1V 7JH (GB)**

(56) References cited:
**EP-A1- 0 718 066      EP-A2- 1 219 373
JP-A- 55 031 512      US-A- 5 410 117**

**Description**

BACKGROUND OF THE INVENTION

1. Field of the Invention

The present invention relates to a controller for a wire cut electric discharge machine capable of improving machining accuracy of machining a corner portion of a workpiece according to the preamble of claim 1. Such a controller is disclosed in document EP 1219373.

2. Description of the Related Art

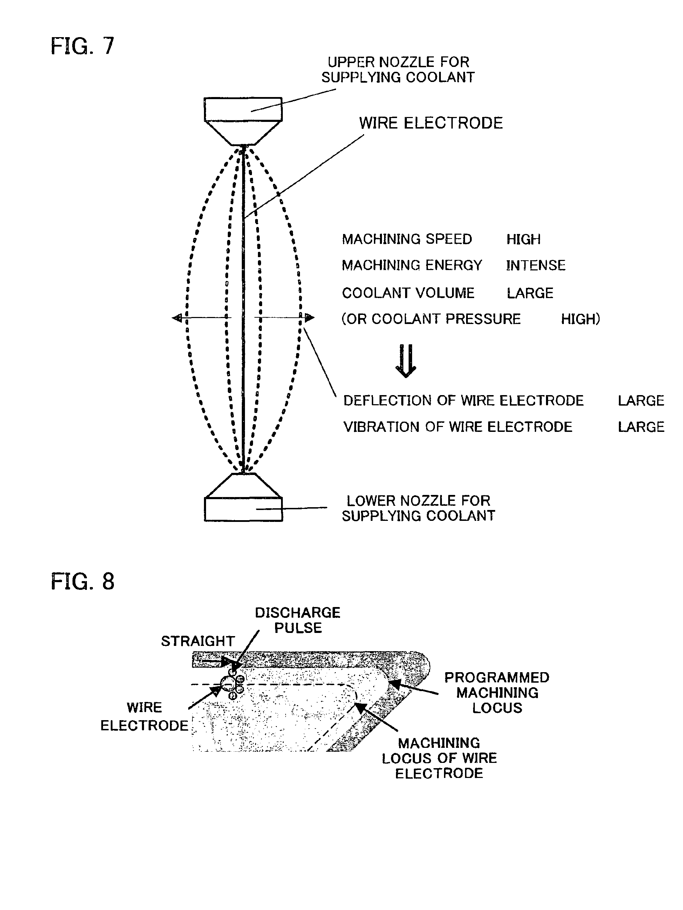

When a workpiece is machined using a wire cut electric discharge machine, machining accuracy is reduced in a corner portion of a machining shape as compared to a straight portion thereof. The machining accuracy refers to a dimension error with respect to a programmed shape. The reduction of the machining accuracy in a corner portion may be caused by variation in machining amount and deflection of a wire electrode at the corner portion. In particular, in rough machining, since a workpiece is in an unprocessed state, the electric discharge machining is performed with intense machining energy and jet flow of machining fluid (coolant). Therefore, a wire electrode between an upper nozzle for supplying coolant and a lower nozzle for supplying coolant vibrates and the deflection thereof becomes larger. In addition, since machining speed is important in rough machining, it is performed at high machining speed, which results in further deflection of the wire electrode (see FIG. 7).

In a wire cut electric discharge machine, a wire electrode moves relatively to a workpiece along a programmed machining  locus while applying a pulse current to a gap between the wire electrode and the workpiece, as shown in a model of electric discharge machining shown in FIG. 8. At this time, a deviation occurs between an actual machining path of the wire electrode and a machining path instructed by a numerical controller (NC) due to the deflection of the wire electrode, and thus the machining accuracy deteriorates.

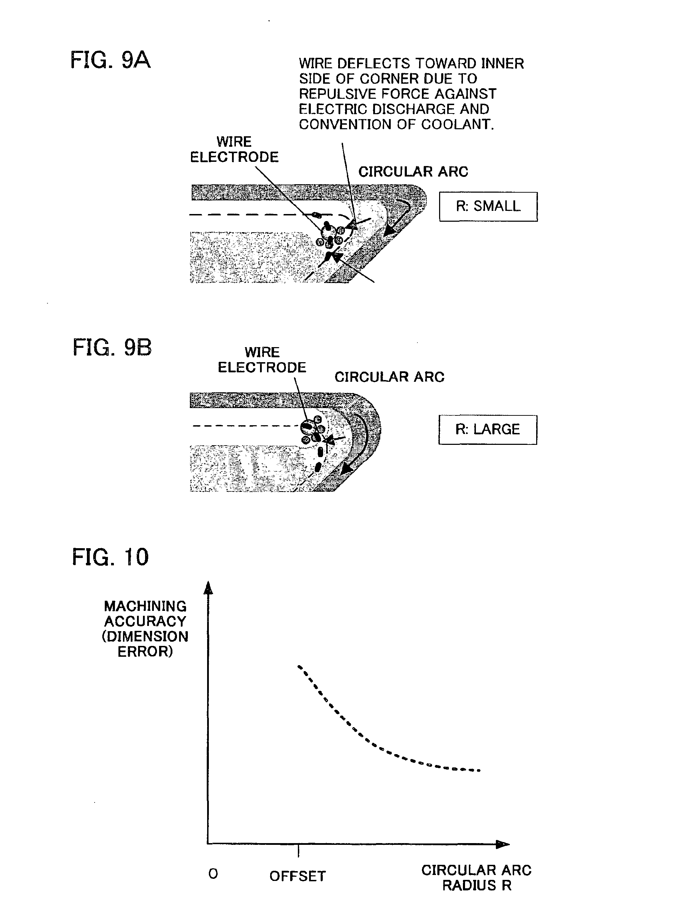

FIGS. 9A and 9B are model diagrams of machining a corner portion by wire cut electric discharge machining. As shown in FIG. 9A, when a radius of curvature of a circular arc corner portion (hereinafter referred to as "circular arc radius") R is small, a wire electrode deflects toward the inner side of the corner due to repulsive force against the electric discharge and convection of coolant. A deviation occurs in the machining path as a result of the deflection of the wire electrode, and the machining accuracy deteriorates. On the other hand, when the circular arc radius R of the circular arc is large as shown in FIG. 9B, the machining accuracy deteriorates due to the deflection of the wire electrode less often.

FIG. 10 is a graph for quantitatively explaining a result of machining using a conventional wire cut electric discharge machine. A curve represented by a broken line shows a relation between a circular arc radius R and the machining accuracy. In conventional wire cut electric discharge machining, the tendency of machining accuracy deterioration becomes more remarkable as the circular arc radius R of a corner portion is smaller, as shown in FIG. 10. Conversely, the problem of machining accuracy  deterioration occurs less often as the circular arc radius R of the corner portion is larger. It is to be noted that the graph of the machining accuracy shown in FIG. 10 is for the case where the corner portion has a concave shape. In the case where the corner portion has a convex shape, the workpiece can be machined even when the circular arc radius R is smaller than a radius of the wire electrode.

The following Japanese patent publications and international publication disclose techniques for improving the machining accuracy of machining a corner portion in wire cut electric discharge machining.

Japanese Patent Application Laid-Open (JP-A) No. 2001-162446 discloses a technique for improving the machining accuracy of machining a circular arc corner by obtaining an amount of deflection of a wire electrode in advance using a value of a current flowing the wire electrode as a parameter by means of experiments, and calculating machining conditions based on a function having a radius of the circular arc as a variable.

JP-A Nos. 2002-254250 and 2006-130656 disclose techniques for improving machining accuracy of machining a corner portion and avoiding breaking by controlling a machining speed, machining energy and a volume of machining fluid depending on results of comparing the number of pulses and a pulse current integration value.

JP-A No. 2000-84743 discloses a technique of gradually lowering a feed speed of a wire electrode from an initially set value until the wire electrode reaches a corner portion in rough  machining so that the feed speed becomes zero when the wire electrode reaches the corner portion to stop a movement of the wire electrode relative to the workpiece for a predetermined time, and thereafter keeping the feed speed as low as possible. In this technique, a discharge quiescent time is set to be long before the corner portion to reduce the frequency of the electric discharge and the pressure of the jet flow of the machining fluid is set to be smaller than the pressure of an initially set value at the corner portion.

International Publication No. WO2002/36295 discloses a technique of reducing discharge energy in a corner portion of a machining path and a section from the corner portion to a point a predetermined distance past the corner portion (as compared to the discharge energy up to a point a predetermined distance before a starting point of the corner portion) at a predetermined ratio depending on at least one of a first condition determined by a corner shape of the corner portion such as magnitudes of a radius and an angle thereof and a second condition determined by a required specification such as desired machining shape accuracy. The reduction of the discharge energy is performed in a manner that the time rate of the change of the discharge energy is substantially constant. Specifically, the discharge energy is reduced by controlling a pulse quiescent time or an average machining gap voltage.

JP-A No. 63-229228 discloses a technique for preventing a machining error by obtaining a distance immediately before a corner at which a discharge removal amount begins to change, controlling machining electric conditions such as a machining gap voltage in an unloaded state, a quiescent time, a peak current value and an average machining voltage, and correcting a machining speed and a position to which the wire moves so as to keep a distance of a gap between the side of a wire electrode and the workpiece constant after the beginning of change in discharge removal amount.

JP-A No. 1-127226 discloses a technique of sequentially changing machining conditions (machining speed, machining gap voltage, discharge time, discharge quiescent time, tension of wire electrode) in a minute distance before and after a corner in multiple stages for each travel distance of about 0.005 mm to 0.1 mm.

JP-A No. 2003-165030 discloses a technique of setting a discharge quiescent time in a corner portion longer than in other portions, correcting a voltage value corresponding to a machining gap voltage according to the discharge quiescent time set longer, and performing speed control based thereon.

JP-A No. 2006-123036 discloses a technique of controlling a peak current of discharge energy to be large and a discharge quiescent time to be short in an inner curved portion, and controlling the peak current of discharge energy to be small and the discharge quiescent time to be long in an outer curved portion. In this technique, the travel speed is low in the inner curved portion and the travel speed is high in the outer curved portion.

JP-A No. 63-113607 discloses a technique of loading machining parameters such as a machining output and a machining speed, and the like set in advance depending on a travel distance or a machining radius for each machining material and each thickness into a memory, selecting, writing and displaying the parameters in a laser beam machine.

JP-ANo. 63-68323 discloses a technique of storing electric machining conditions (resistance for current control, direct-current source voltage, ON time, OFF time) depending on a corner angle and a circular arc radius that allow machining in which a gap voltage at finish machining is equal to a gap voltage for machining a straight portion, and reading out the stored conditions at a corner portion to perform machining.

In the technique disclosed in the above-mentioned JP-A No. 2001-162446, many targets to be controlled (machining speed, discharge energy, control gain of current/position feedback) are provided based on the function having a radius of the circular arc as a variable. In addition, the function needs to be obtained experimentally depending on the parameters. Accordingly, as there are more conditions to be assumed (such as the thickness of a workpiece, the wire radius and materials), more immense effort will be required to determine how to control. Therefore, the technique is not practical in terms of controllability.

It is also known to change the machining path by taking the deflection of the wire electrode into consideration. However, it is difficult to determine how much the machining path should be adjusted depending on various factors such as the dimension (radius) of the corner portion (circular arc) and electric machining conditions. It is also attempted to respond to various states by providing several parameters. However, as there are more states to be assumed in order to improve controllability, more immense effort will be required to determine the parameters.

A technique for reducing the workload and automatically controlling a machining speed, machining energy and a coolant volume is demanded. According to the techniques disclosed in the above-mentioned JP-A Nos. 2002-254250 and 2006-130656, the discharge quiescent time can be controlled depending on the number of discharge pulses, and the number of discharge pulses can be changed by controlling the discharge quiescent time. Then, the machining speed and the volume of machining fluid are controlled according to the changed number of discharge pulses. For example, the number of discharge pulses decreases as the machining amount reduces, the machining speed becomes lower as a result of the reduced number of discharge pulses, thereby the machining energy also reduces and the coolant volume also reduces. Thus, it is possible to reduce the deflection of the wire electrode so as to improve the machining accuracy of machining a corner portion.

However, it has been found that as the circular arc radius of the circular arc corner portion is smaller, the deflection of the wire electrode becomes larger, and that the number of discharge pulses may not decrease sufficiently in a state where the wire electrode deflects and thus the reduction of speed, the reduction of machining energy and the reduction of the coolant volume may not be sufficient.

EP 1219373 discloses a controller for a wire electric discharge machine having means intended for preventing surplus supply of energy, improving machining speed and machining precision and avoiding disconnection of the wire electrode.

SUMMARY OF THE INVENTION

In view of the above disadvantages of the conventional techniques, an object of the present invention is to provide a controller for a wire cut electric discharge machine capable of improving the machining accuracy when machining a circular arc corner portion of a workpiece by controlling the discharge quiescent time.

A controller for a wire cut electric discharge machine according to the invention is defined in claim 1.

The discharge quiescent time controlling means may control the discharge quiescent time to be in inverse relation to the circular arc radius of the circular arc corner portion.

The discharge quiescent time controlling means may control the discharge quiescent time to gradually change from a position ahead of a starting point of the circular arc corner portion by a predetermined distance, to the starting point of the circular arc corner portion.

The controller further includes fluid volume controlling means that controls a coolant volume so that the coolant volume supplied between the wire electrode and the workpiece increases when the ratio obtained by the comparing means increases, whereas the coolant volume is decreased when the ratio decreases.

According to the above-described configuration, the present invention can provide a controller for a wire cut electric discharge machine capable of improving the machining accuracy when machining a circular arc corner portion of a workpiece by controlling the discharge quiescent time. In other words, the present invention can provide a wire cut electric discharge machine capable of machining with optimal energy (discharge quiescent time), machining speed and coolant volume depending on the circular arc radius of the corner portion, also improving the straightness of the wire electrode and improving the machining accuracy of machining a circular arc corner portion.

BRIEF DESCRIPTION OF THE DRAWINGS

FIGS. 1A and 1B are model diagrams showing electric discharge machining of a corner portion;

FIG. 2 is a block diagram showing a main part of a controller for a wire cut electric discharge machine according to the present invention;

FIG. 3 is a graph for comparing the machining accuracy when machining a circular arc corner portion using a conventional wire cut electric discharge machine with that when machining a circular arc corner portion using a wire cut electric discharge machine controlled by a controller according to the present invention;

FIG. 4 is a graph for explaining a relation between a circular arc radius of a circular arc corner portion and a discharge quiescent time (OFF time);

FIG. 5 is a diagram for explaining machining of a circular arc corner portion;

FIG. 6 is a chart for explaining an example of a discharge quiescent time control at the circular arc corner portion shown in FIG. 5 in electric discharge machining of the circular arc corner portion;

FIG. 7 is a diagram for explaining a deflection of a wire electrode;

FIG. 8 is a model diagram for explaining electric discharge machining using a wire electrode;

FIGS. 9A and 9B are diagrams for explaining deviation of a machining path due to a wire deflection at a circular arc corner portion in a conventional art; and

FIG. 10 is a graph for explaining a relation between a radius of a circular arc corner portion and the machining accuracy obtained by the wire cut electric discharge machine according to the conventional art.

DETAILED DESCRIPTION OF THE PREFERRED EMBODIMENTS

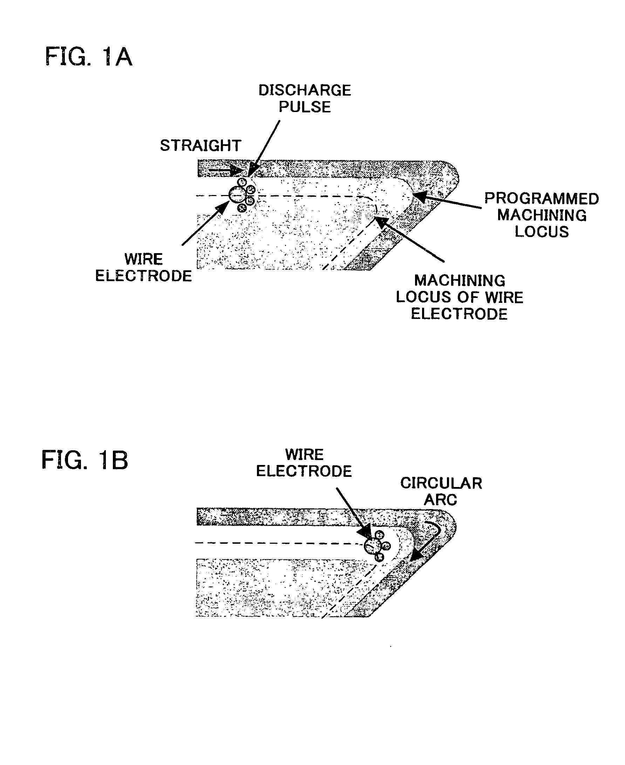

First, a principle of a machining method for machining a circular arc corner portion using a controller for a wire cut electric discharge machine according to the present invention will be described with reference to FIGS. 1A and 1B.

When electric discharge machining is performed on a workpiece using a wire cut electric discharge machine, the machining accuracy is reduced in a corner portion of a machining shape as compared to a straight portion thereof. This may be caused by variation in machining amount and deflection of a wire electrode, as described above. At a circular arc corner portion, the machining amount varies depending on the shape and dimension of the corner portion as compared to a straight portion. For example, in rough machining, a portion already subjected to machining is present a minute section ahead in a machining path at the corner in an inner side of the circular arc corner portion, and as a result, the machining amount is reduced and a gap between a wire electrode and the workpiece is widened (see FIG. 1B).

Unless the reduction in the machining amount is taken precisely and a control based on such variation in the machining amount is performed, the gap between the wire electrode and the workpiece remains wide and a uniform machined surface cannot be obtained (that is, the gap between the wire electrode and the workpiece cannot be kept constant). Thus, the machining accuracy deteriorates. Therefore, in order to improve the machining accuracy, the states of the machining amount and the gap between the wire electrode and the workpiece are detected to perform control depending on the states of the machining amount and the gap between the wire electrode and the workpiece. Specifically, by focusing on the fact that a change in the machining amount can be taken as a change in the number of discharge pulses, a machining speed, machining energy (a discharge quiescent time) and a volume of coolant are controlled depending on the number of discharge pulses.

In addition, when a circular arc corner portion of the workpiece is machined, a machining characteristic that the machining accuracy is reduced as a circular arc radius of the circular arc corner portion is smaller is noted. Based on this, as the circular arc radius of the circular arc corner portion to be machined is smaller as compared to a reference value (reference radius), the discharge quiescent time is increased to sufficiently reduce the machining energy, thereby decreasing the number of discharge pulses. In this manner, it is possible to appropriately control the machining speed and the volume of coolant depending on the machining amount indicated by the number of discharge pulses. As a result, the machining speed, the machining energy and the volume of coolant are sufficiently reduced so that the deflection of the wire electrode is also reduced, thereby increasing the straightness of the wire electrode and improving the machining accuracy.

Embodiments of the present invention are hereinafter described in conjunction with the drawings.

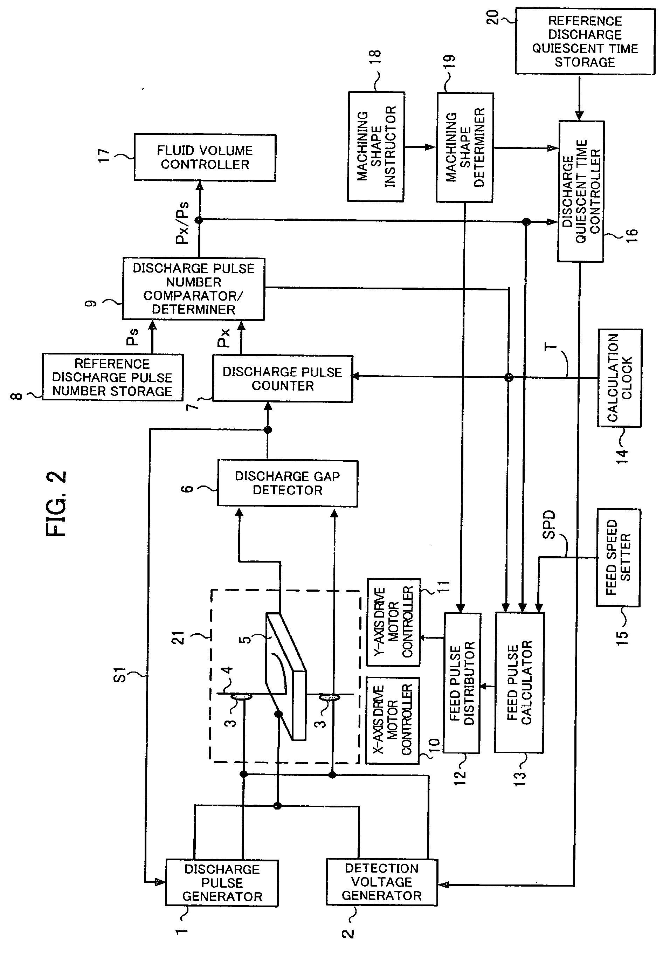

FIG. 2 is a block diagram of a main part of a controller for controlling a wire cut electric discharge machine according to an embodiment of the present invention. A discharge pulse generator 1 includes a circuit composed of active elements such as transistors that generate a discharge pulse current, a charge/discharge circuit for a capacitor, a direct current source, and the like. One output of the discharge pulse generator 1 is connected to upper and lower conducting brushes 3, 3, and the other output is connected to a workpiece 5 to supply a discharge pulse current to a gap between a traveling wire electrode 4 and the workpiece 5.

A detection voltage generator 2 generates a detection voltage for detecting a state of the gap between the wire electrode 4 and the workpiece 5. One output of the detection voltage generator 2 is connected to the workpiece 5, and the other output is connected to the upper and lower conducting brushes 3, 3. A table (not shown) on which the workpiece 5 is placed in a machining tank 21 is driven and controlled by an X-axis drive motor (not shown), a Y-axis drive motor (not shown), an X-axis drive motor controller 10 and a Y-axis drive motor controller 11, which constitute the moving means.

A discharge gap detector 6 determines whether or not the gap between the wire electrode 4 and the workpiece 5 is in a state in which electric discharge is possible based on a detection voltage output from the detection voltage generator 2. One input of the discharge gap detector 6 is connected to the workpiece, and the other input is connected to the upper and lower conducting brushes 3, 3. When the discharge gap detector 6 determines that the electric discharge is possible, it outputs discharge pulse input signals S1 to the discharge pulse generator 1 and a discharge pulse counter 7.

The discharge pulse counter 7 counts the discharge pulse input signals during a predetermined period (time T) based on signals output from a calculation clock 14 per unit time (predetermined period) T. In other words, the discharge pulse counter 7 substantially counts the number of discharge pulses of the discharge pulse current generated in the gap between the wire electrode 4 and the workpiece 5.

A reference discharge pulse number storage 8 stores a reference number of discharge pulses Ps that is input and set in advance. A discharge pulse number comparator/determiner 9 compares the number of discharge pulses Px counted per unit time (predetermined period) T and stored in the discharge pulse counter 7 with the reference number of discharge pulses Ps stored in advance in the reference discharge pulse number storage 8 every unit time (predetermined period) T described above, and outputs a ratio (Px/Ps) of the number of discharge pulses Px to the reference number of discharge pulses Ps to a feed pulse calculator 13, a discharge quiescent time controller 16 and a fluid volume controller 17.

The feed pulse calculator 13 calculates a travel amount (distance) $\Delta x$ at each signal from the calculation clock 14 per each predetermined period T by multiplying a distance (SPD $\times$ T), which is obtained from a set feed speed SPD received from a feed speed setter 15 and the predetermined period T, by the ratio (Px/Ps) of the number of discharge pulses Px to the reference number of discharge pulses Ps received from the discharge pulse number comparator/determiner 9. That is, $\Delta x = \text{SPD} \times T \times (Px/Ps)$ is calculated. Then, the feed pulse calculator 13 outputs a pulse train corresponding to the travel amount $\Delta x$ as a movement instruction to a feed pulse distributor 12.

Here, a method for setting the reference number of pulses Ps is described. A relation between the number of discharge pulses per unit time T, P/T (= Ps), and a travel speed per unit time T, $\Delta/T$ (=$\Delta s$), is obtained in advance by varying the thickness of workpieces and the radius of the wire electrodes (machining groove width) for workpieces of various materials, and a ratio $\kappa$ (= P/$\Delta$) of the number of discharge pulses P to the travel amount $\Delta$ is also obtained in advance for the various materials and thicknesses. Then, the reference number of discharge pulses Ps (= $\kappa \times$ SPD) can be obtained by multiplying the ratio $\kappa$ obtained in advance by the set feed speed SPD. This technique is described in detail in JP-A Nos. 2002-254250 and 2006-130656 mentioned above.

The feed pulse distributor 12 divides the pulse train to X-axis drive pulses and Y-axis drive pulses according to machining shape data described in a machining program output from a machining shape determiner 19, and feeds these X-axis drive pulses and Y-axis drive pulses to the X-axis drive motor controller 10 and the Y-axis drive motor controller 11 so as to drive the X-axis drive motor and the Y-axis drive motor that drive the table on which the workpiece 5 is placed. It is to be noted that the travel amount Δx does not represent a travel amount of the X-axis drive shaft but represents a combined travel amount of all the drive shafts.

The fluid volume controller 17 controls a volume of the coolant supplied between the wire electrode 4 and the workpiece 5. The fluid volume controller 17 controls the fluid volume using an evaluation function based on the ratio (Px/Ps) of the number of discharge pulses Px to the reference number of discharge pulses Ps received from the discharge pulse number comparator/determiner 9. Specifically, in order to control the volume of coolant depending on a sludge amount, the volume of coolant is changed by generating an evaluation function so that the volume of coolant is a value obtained by multiplying a reference coolant volume (reference value FRs) by the ratio (Ps/Px) of the reference number of discharge pulses Ps to the number of discharge pulses Px when a change occurred.

A machining shape instructor 18 outputs the machining shape data described in the machining program to the machining shape determiner 19. The machining shape determiner 19 recognizes the shapes of a circular arc corner and other portions (such as a straight portion) and outputs the machining shape data to the feedpulse distributor 12. Further, when the machining shape is a circular arc corner, the machining shape determiner 19 also outputs the machining shape data to the discharge quiescent time controller 16.

The feed pulse distributor 12 supplies the divided X-axis drive pulses and Y-axis drive pulses to the X-axis drive motor controller 10 and the Y-axis drive motor controller 11 to drive the X-axis drive motor and the Y-axis drive motor, respectively, that drive the table on which the workpiece is placed. The machining shape determiner 19 further outputs the recognized machining shape data to the discharge quiescent time controller 16.

A reference discharge quiescent time storage 20 stores a reference discharge quiescent time OFFs. At a circular arc corner (in other words, when the discharge quiescent time controller 16 receives a signal that the machining shape is a circular arc corner from the machining shape determiner 19 and determines that the circular arc radius R thereof is smaller than the reference circular arc radius), the discharge quiescent time controller 16 reads the reference discharge quiescent time OFFs from the reference discharge quiescent time storage 20, calculates a discharge quiescent time OFFr depending on the circular arc radius R, and outputs the calculated discharge quiescent time OFFr to the detection voltage generator 2. The calculation of the discharge quiescent time OFFr is performed by an equation (1) describedbelow, for example. Alternatively, circular arc radii R and discharge quiescent times OFFr may be stored in advance in a form of a table in a storage means (not shown) instead of calculating a discharge quiescent time OFFr by a relational expression such as the equation (1). Then, the discharge quiescent time controller 16 calls a discharge quiescent time OFFr associated with the circular arc radius R input from the machining shape determiner 19 from the storage means that stores in the form of a table, and outputs the called discharge quiescent time OFFr to the detection voltage generator 2.

The detection voltage generator 2 applies a voltage to the gap between the wire electrode 4 and the workpiece 5 after being idle for the discharge quiescent time OFFr. In this manner, the number of discharge pulses Px is changed depending on the circular arc radius of the circular arc corner portion.

Accordingly, at a circular arc corner portion, the number of discharge pulses Px is changed by controlling the discharge quiescent time depending on the circular arc radius, and the travel distance per a predetermined time (namely, machining speed) and the volume of coolant are controlled based on the ratio (Px/Ps) of the number of discharge pulses Px thus changed to the reference number of discharge pulses Ps. Therefore, the machining accuracy at the circular arc corner portion can be improved.

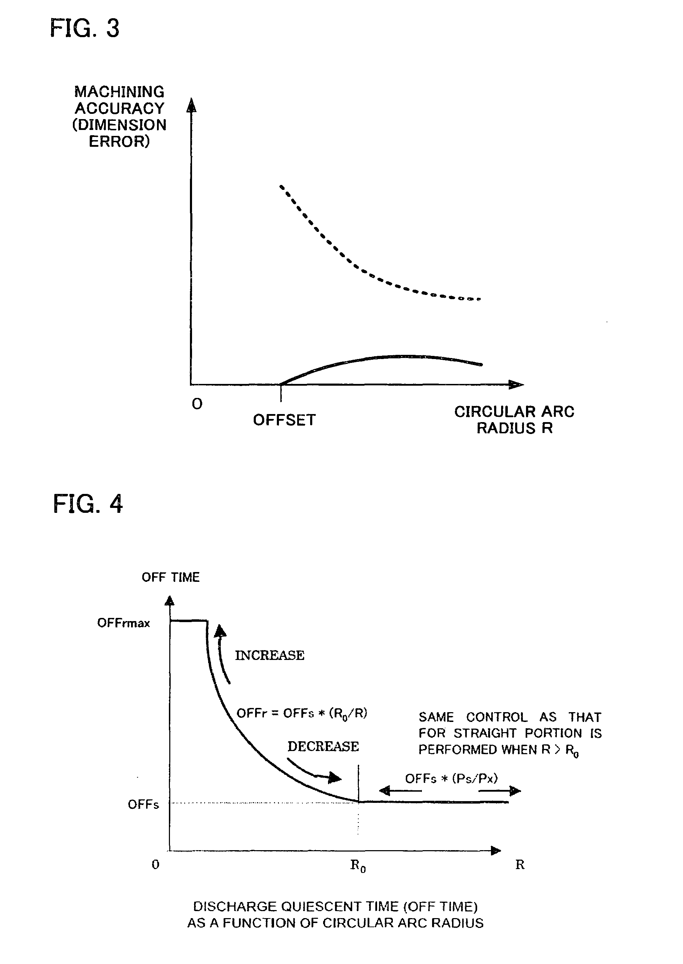

FIG. 3 is a graph for comparing machining accuracy (a curve represented by a broken line) of machining of a circular arc corner portion using a conventional wire cut electric discharge machine with that (a curve represented by a solid line) of machining a circular arc corner portion using a wire cut electric discharge machine controlled by a controller according to the present invention. Comparison between the two curves shows that the machining accuracy is far more improved when the wire cut electric discharge machine is controlled by the controller according to the present invention. The two curves show a relation between the circular arc radius and the machining accuracy in the case where the circular arc to be machined has a concave shape, and both of the two curves of FIG. 3 start at an offset position on the horizontal axis representing the circular arc radius since the machining path is offset (the machining path is offset by an amount corresponding to a radius of a wire and the discharge gap) in wire cut electric discharge machining.

Next, the equation for calculating the discharge quiescent time OFFr for electric discharge machining of a circular arc corner portion is described.

From among discharge quiescent times, a discharge quiescent time at a circular arc corner portion is represented by OFFr. A controller for a wire cut electric discharge machine according to the present invention controls the discharge quiescent time OFFr for machining a circular arc corner portion using the following equation:

$$\mathrm{OFFr} = \mathrm{OFFs} \times R_0/R \quad \ldots (1).$$

In the above-described equation (1), OFFs represents a reference discharge quiescent time, $R_0$ represents a reference radius for controlling a circular arc corner, and R represents a circular arc radius of the circular arc corner portion.

Since the machining path is offset (the machining path is offset by an amount corresponding to a radius of a wire plus the discharge gap) in wire cut electric discharge machining, the machining accuracy will further be improved if the offset amount is considered in the calculation:

$$\texttt{radius R' of machining path = radius R of programmed shape}$$
$$\texttt{+ offset amount.}$$

In the above-described equation (1), the discharge quiescent time OFFr at a circular arc corner portion is calculated as a value proportional to an inverse of the circular arc radius R because a machining volume ($m^3$) of a workpiece and a pressure ($N/m^2$) of a machining fluid (coolant) supplied to a machining portion vary logarithmically with respect to the circular arc radius R.

According to the above-described equation (1), the discharge quiescent time OFFr is controlled to be longer than the reference discharge quiescent time OFFs when a circular arc corner portion having a circular arc radius R smaller than the reference radius $R_0$ is machined. Since the discharge quiescent time OFFr can be controlled depending on the circular arc radius R in this manner when the circular arc radius R is smaller than the reference radius $R_0$, the present invention can be applied to machining of machining shapes having various circular arc radii.

When the machining shape determiner 19 determines that the shape to be machined is not a circular arc corner or is a circular arc corner having a circular arc radius R larger than the reference radius $R_0$ for controlling a circular arc corner, the discharge quiescent time controller 16 does not calculate the discharge quiescent time OFFr for machining a circular arc corner portion but controls the discharge quiescent time with a value (=OFFs $\times$ (Ps/Px) obtained by multiplying the ratio (Ps/Px) of the reference number of discharge pulses Ps to the number of discharge pulses Px.

FIG. 4 is a graph for explaining a relation between a circular arc radius of a circular arc corner portion and a discharge quiescent time (OFF time), in which the horizontal axis represents a circular radius R to be machined and the vertical axis represents a discharge quiescent time OFFr.

The above-described equation (1) shows that the discharge quiescent time OFFr and the circular arc radius R are in inverse relation to each other, but the discharge quiescent time is limited (to OFFrmax) when the circular arc radius R is a predetermined value or smaller. On the other hand, when the circular arc radius R is larger than the reference radius $R_0$ for controlling a circular arc corner described above, the discharge quiescent time is controlled with (OFFs $\times$ (Ps/Px)). This is because the machining of such circular arc corner portion becomes more similar to machining of a straight portion as the circular arc radius R is larger, and thus there are not any troubles in machining of a circular arc corner portion described above.

If [OFFs $\times$ $R_0$] is regarded as one coefficient in the above-described equation (1), the discharge quiescent time OFFr can be calculated from only on the circular arc radius R. In other words, the discharge quiescent time OFFr can be adjusted depending on the magnitude of the circular arc radius R only. $R_0$ that constitutes the coefficient [OFFs $\times$ $R_0$] can be arbitrarily set and can also be determined as a most appropriate value depending on a required machining accuracy and various machining conditions (such as a thickness and material of a workpiece, a radius and material of a wire electrode) by means of experiments. Moreover, since the machining speed and the volume of coolant are automatically controlled depending on the machining amount changed with the adjusted discharge quiescent time OFFr, no work is required for adjustment of them.

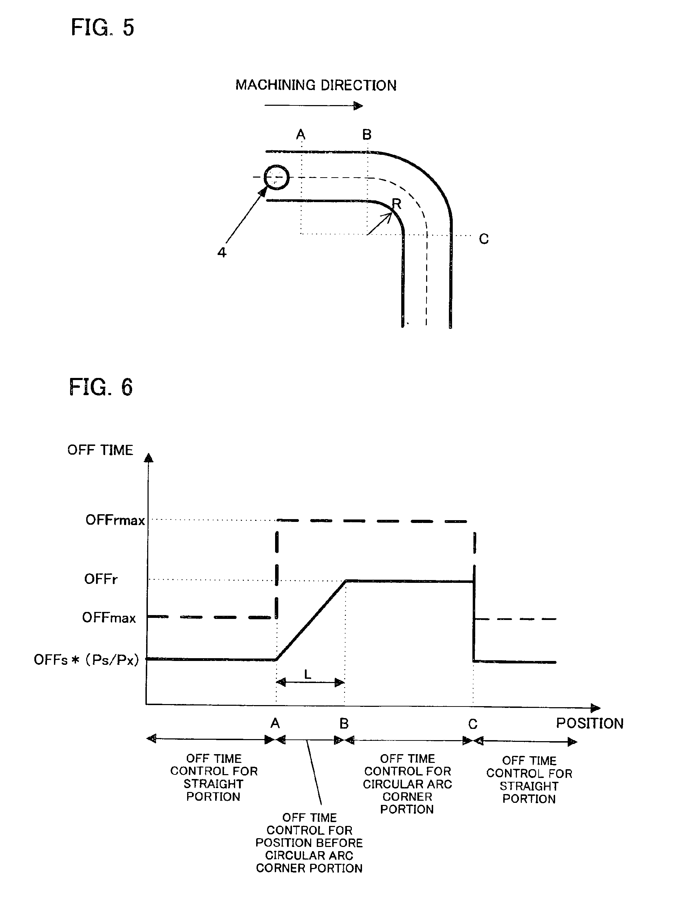

In addition, by setting an upper limit OFFrmax of the discharge quiescent time OFFr for a circular arc corner portion to be controlled as shown in FIGS. 4 and 6, it is possible to prevent the discharge quiescent time OFFr at the time of machining a minute circular arc (such as a circular arc smaller than a wire diameter of the wire electrode 4) from being extremely long as a result of calculation of the equation (1) (where OFFr is larger as R is smaller).

FIG. 6 is a chart for explaining an example of a discharge quiescent time (OFF time) control at a circular arc corner portion shown in FIG. 5 in electric discharge machining of the circular arc corner portion. It is not preferable to suddenly change the discharge quiescent time in terms of controllability of wire electric discharge machining. This is because the wire electrode enters to machine the circular arc corner portion, overreaching the machining path instructed by the controller of the wire cut electric discharge machine, and the machining state gradually changes. In other words, this is because the wire shape of the wire electrode 4 is columnar and thus the machining state start changing gradually at a position ahead of an instructed position by a distance corresponding to the wire radius plus the discharge gap.

Therefore, as shown in FIGS. 5 and 6, by controlling the discharge quiescent time to change gradually and smoothly from the discharge quiescent time (OFFs $\times$ (Ps/Px)) to the discharge quiescent time OFFr (= OFFs $\times$ $R_0$/R) in a section between a position A ahead of the position B where the wire electrode 4 enters the circular arc corner portion (section B-C) and the position B (starting point B of the circular arc corner portion), continuousness of the charge quiescent time can be maintained.

Since the distance L is set in advance, the amount of change of the discharge quiescent time per unit travel distance can be obtained by dividing, by the distance L, the difference between the discharge quiescent time at the starting point B of the circular arc corner portion and the discharge quiescent time at the position A ahead of the point B by the predetermined distance L. The position of the wire electrode 4 can be determined based on feedback information from position detectors incorporated in the X-axis drive motor and the Y-axis drive motor, and whether or not to perform machining of the circular arc corner portion can be found out by analyzing a block described in the machining program.

During a section between the starting point B of the circular arc corner portion and an end point C thereof, the machining is performed with the discharge quiescent time OFFr for a circular arc corner portion. From the end point C, the machining is performed with the discharge quiescent time (OFFs $\times$ (Ps/Px)). By setting the discharge quiescent time at the circular arc corner portion longer than the discharge quiescent time at the straight portion in this manner, deflection and vibration of the wire electrode 4 can be reduced.

It is to be noted that although a circular arc corner portion having a concave shape is described as the corner portion in the above description, the present invention can also be applied to a circular arc corner portion having a convex shape.

## Claims

1. A controller for a wire cut electric discharge machine that performs electric discharge machining by applying a discharge pulse current to a gap between a wire electrode (4) and a workpiece (5) while moving the wire electrode relatively to the workpiece according to a machining program, the controller comprising:

   moving means (10, 11) that moves the wire electrode (4) relatively to the workpiece (5) along a machining path specified by the machining program based on a movement instruction;
   discharge pulse number counting means (7) that counts the number (Px) of pulses of the discharge pulse current applied to the gap at predetermined time intervals (T);
   reference discharge pulse number storing means (8) that stores a reference number (Ps) of discharge pulses;
   comparing means (9) that obtains a ratio (Px/Ps) of the number of discharge pulses stored in the reference discharge pulse number storing means (Ps) to the number of discharge pulses (Px) counted by the discharge pulse number counting means (7); and
   feed amount controlling means (13) that output a distance ($\Delta$x) as the movement instruction, to the moving means (10, 11) at the predetermined time intervals (T), wherein the distance ($\Delta$x) is obtained by multiplying a travel distance (SPD x T) of the wire electrode (4) relative to the workpiece (5) by the ratio (Px/Ps) obtained by the comparing means (9), and wherein the travel distance is calculated from a set feed rate (SPD) for the relative movement and the predetermined time intervals (T); the controller **characterised by** further comprising
   reference discharge quiescent time storing means (20) that stores a reference discharge quiescent time (OFFs);
   reference circular arc radius storing means that stores a reference circular arc radius ($R_0$) of a circular arc corner portion;
   machining shape determining means (19) that determines a machining shape instructed by the machining program; and
   discharge quiescent time controlling means (16) that receives a signal from the machining shape determining means (19) indicating that the shape has been determined as a circular arc corner, determines whether a circular arc radius (R) of a circular arc corner portion of the machining shape is smaller than the reference circular arc radius ($R_0$) stored in the reference circular arc radius storing means, and, if it is determined that the machining shape is the circular arc corner having the circular arc radius (R) smaller than the reference circular arc radius ($R_0$), controls a discharge quiescent time (OFFr) in dependence on the circular arc radius (R), wherein the discharge quiescent time is controlled to increase and become longer than the reference discharge quiescent time stored in the reference discharge quiescent time storing means as the circular arc radius of the circular arc corner portion becomes smaller, due to the dependence of the discharge quiescent time (OFFr) on the circular arc radius (R).

2. The controller for a wire cut electric discharge machine according to claim 1, wherein the discharge quiescent time controlling means (16) controls the discharge quiescent time (OFFr) to be in inverse relation to the circular arc radius (R) of the circular arc corner portion.

3. The controller for a wire cut electric discharge machine according to claim 1 or 2, wherein the discharge quiescent time controlling means (16) controls the discharge quiescent time (OFFr) to gradually change from a position ahead of a starting point of the circular arc corner portion by a predetermined distance, to the starting point of the circular arc corner portion.

4. The controller for a wire cut electric discharge machine according to any one of claims 1 to 3, further comprising fluid volume controlling means (17) that controls a coolant volume so that the coolant volume supplied between the wire electrode (4) and the workpiece (5) increases when the ratio (Px/Ps) obtained by the comparing means (9) increases, whereas the coolant volume is decreased when the ratio decreases.

## Patentansprüche

1. Steuerung für eine elektrische Drahterodiermaschine, die elektrische Drahterosion ausführt durch Anwenden eines Entladungspulsstroms in eine Lücke zwischen einer Drahtelektrode (4) und einem Werkstück (5), während die Drahtelektrode gegenüber dem Werkstück gemäß einem Bearbeitungsprogramm bewegt wird, die Steuerung umfassend

Bewegungsmittel (10, 11), welches die Drahtelektrode (4) gegenüber dem Werkstück (5) entlang einem vom Bearbeitungsprogramm auf der Basis eines Bewegungsbefehls bestimmten Bearbeitungspfad bewegt;

Entladungspulsanzahlsteuerungsmittel (7), das die Anzahl (Px) Pulse des auf die Lücke angewandten Entladungspulsstroms zu vorbestimmten Zeitabschnitten (T) zählt;

Referenz-Entladungspulsanzahlablegemittel (8), welches eine Referenzanzahl (Ps) Entladungspulse ablegt;

Vergleichsmittel (9), welches ein Verhältnis (Px/Ps) der Anzahl im Referenz-Entladungspulsanzahlablegemittel abgelegten Entladungspulse (Ps) zur Anzahl im Entladungspulsanzahlsteuerungsmittel vom Entladungspulsanzahlsteuerungsmittel (7) gezählten Entladungspulse (Px), erhält; und

Zufuhrmengensteuermittel (13), welches eine Entfernung ($\Delta x$) als den Bewegungsbefehl an das Bewegungsmittel (10, 11) zu den vorbestimmten Zeitabständen (T) ausgibt, wobei die Entfernung ($\Delta x$) erhalten wird durch Multiplizieren einer Bewegungsentfernung (SPD $\times$ T) der Drahtelektrode (4) gegenüber dem Werkstück (5) mit dem vom Vergleichsmittel (9) erhaltenen Verhältnis (Px/Ps), und wobei die Bewegungsentfernung berechnet wird aus einer eingestellten Zufuhrgeschwindigkeit (SPD) für die relative Bewegung und aus den vorbestimmten Zeitabständen (T); wobei die Steuerung **dadurch gekennzeichnet ist, dass** sie zudem umfasst

Referenz-Entladungsstillstandzeitablegemittel (20), das eine Referenz-Entladungsstillstandzeit (OFFs) ablegt;

Referenz-Kreisbogenradiusablegemittel, das einen Referenz-Kreisbogenradius ($R_0$) eines Kreisbogen-Eckabschnitts ablegt;

Bearbeitungsformbestimmungsmittel (19), das eine vom Bearbeitungsprogramm befohlene Bearbeitungsform bestimmt; und

Entladungsstillstandzeit-Steuermittel (16), das ein Signal vom Bearbeitungsformbestimmungsmittel (19) erhält, das anzeigt, dass die Form als Kreisbogenecke bestimmt worden ist, bestimmt, ob ein Kreisbogenradius (R) eines Kreisbogeneckenabschnitts der Bearbeitungsform kleiner als der im Referenz-Kreisbogenradiusablegemittel abgelegte Referenz-Kreisbogenradius ($R_0$) ist, und, wird bestimmt, dass die Bearbeitungsform die Kreisbogenecke mit einem kleineren Kreisbogenradius (R) als der Referenz-Kreisbogenradius ($R_0$) ist, eine Entladungsstillstandzeit (OFFr) abhängig vom Kreisbogenradius (R) steuert, wobei die Entladungsstillstandzeit so gesteuert ist, dass sie sich vergrößert und länger wird als die im Referenz-Entladungsstillstandzeitablegemittel abgelegte Referenz-Entladungsstillstandzeit, während der Kreisbogenradius des Kreisbogeneckenabschnitts kleiner wird, wegen der Abhängigkeit der Entladungsstillstandzeit (OFFr) vom Kreisbogenradius (R).

2. Steuerung für eine elektrische Drahterodiermaschine gemäß Anspruch 1, wobei das Entladungsstillstandzeit-Steuermittel (16) die Entladungsstillstandzeit (OFFr) so steuert, dass sie in Umkehrfunktion zum Kreisbogenradius (R) des Kreisbogeneckenabschnitts steht.

3. Steuerung für eine elektrische Drahterodiermaschine gemäß Anspruch 1 oder 2, wobei das Entladungsstillstandzeit-Steuermittel (16) die Entladungsstillstandzeit (OFFr) so steuert, dass sie sich nach und nach von einer Position vor einem Ausgangspunkt des Kreisbogeneckenabschnitts durch eine vorbestimmte Entfernung ändert, in Richtung des Ausgangspunkts des Kreisbogeneckenabschnitts.

4. Steuerung für eine elektrische Drahterodiermaschine gemäß irgendeinem der Ansprüche 1 bis 3, zudem umfassend Fluidvolumensteuermittel (17), welches ein Kühlmittelvolumen so steuert, dass das zwischen der Drahtelektrode (4) und dem Werkstück (5) bereitgestellte Kühlmittelvolumen sich erhöht, wenn das vom Vergleichsmittel (9) erhaltene Verhältnis (Px/Ps) sich erhöht, während sich das Kühlmittelvolumen verringert, wenn das Verhältnis sich verringert.

**Revendications**

1. Un dispositif de commande pour une machine à décharge électrique à fil de coupe qui exécute un usinage à décharge électrique par l'application d'un courant d'impulsion de décharge à un espace entre une électrode en fil (4) et une pièce à usiner (5) tout en déplaçant l'électrode en fil par rapport à la pièce à usiner selon un programme d'usinage, le dispositif de commande comprenant :

   un moyen de déplacement (10, 11) qui déplace l'électrode en fil (4) par rapport à la pièce à usiner (5) le long d'un trajet d'usinage spécifié par le programme d'usinage en fonction d'une instruction de déplacement,
   un moyen de comptage d'un nombre d'impulsions de décharge (7) qui compte le nombre (Px) d'impulsions du courant d'impulsion de décharge appliquées à l'espace à des intervalles de temps prédéterminés (T),
   un moyen de conservation en mémoire d'un nombre d'impulsions de décharge de référence (8) qui conserve en mémoire un nombre de référence (Ps) d'impulsions de décharge,
   un moyen de comparaison (9) qui obtient un rapport (Px/Ps) du nombre d'impulsions de décharge conservé en mémoire dans le moyen de conservation en mémoire d'un nombre d'impulsions de décharge de référence (Ps) sur le nombre d'impulsions de décharge (Px) décompté par le moyen de comptage d'un nombre d'impulsions de décharge (7), et
   un moyen de commande de quantité d'alimentation (13) qui envoie une distance ($\Delta x$) en tant qu'instruction de déplacement, au moyen de déplacement (10, 11) aux intervalles de temps prédéterminés (T), où la distance ($\Delta x$) est obtenue par la multiplication d'une distance de parcours (SPD x T) de l'électrode en fil (4) par rapport à la pièce à usiner (5) par le rapport (Px/Ps) obtenu par le moyen de comparaison (9), et où la distance de parcours est calculée à partir d'une vitesse d'alimentation définie (SPD) pour le déplacement relatif et des intervalles de temps prédéterminés (T), le dispositif de commande étant **caractérisé en ce qu'**il comprend en outre :

      un moyen de conservation en mémoire d'une durée d'inactivité de décharge de référence (20) qui conserve en mémoire une durée d'inactivité de décharge de référence (OFFs),
      un moyen de conservation en mémoire d'un rayon d'arc circulaire de référence qui conserve en mémoire un rayon d'arc circulaire de référence ($R_0$) d'une partie d'angle d'arc circulaire,
      un moyen de détermination de forme d'usinage (19) qui détermine une forme d'usinage indiquée par le programme d'usinage, et
      un moyen de commande de durée d'inactivité de décharge (16), qui reçoit un signal provenant du moyen de détermination de forme d'usinage (19) indiquant que la forme a été déterminée comme étant un angle d'arc circulaire, détermine si un rayon d'arc circulaire (R) d'une partie d'angle d'arc circulaire de la forme d'usinage est plus petit que le rayon d'arc circulaire de référence ($R_0$) conservé en mémoire dans le moyen de conservation en mémoire d'un rayon d'arc circulaire de référence, et, s'il est déterminé que la forme d'usinage est l'angle d'arc circulaire ayant le rayon d'arc circulaire (R) plus petit que le rayon d'arc circulaire de référence ($R_0$), commande une durée d'inactivité de décharge (OFFr) en fonction du rayon d'arc circulaire (R), où la durée d'inactivité de décharge est commandée de façon à augmenter et à devenir plus longue que la durée d'inactivité de décharge de référence conservée en mémoire dans le moyen de conservation en mémoire d'une durée d'inactivité de décharge de référence à mesure que le rayon d'arc circulaire de la partie d'angle d'arc circulaire diminue, du fait de la dépendance de la durée d'inactivité de décharge (OFFr) par rapport au rayon d'arc circulaire (R).

2. Le dispositif de commande pour une machine à décharge électrique à fil de coupe selon la Revendication 1, où le moyen de commande de durée d'inactivité de décharge (16) commande la durée d'inactivité de décharge (OFFr) de façon à être en relation inverse par rapport au rayon d'arc circulaire (R) de la partie d'angle d'arc circulaire.

3. Le dispositif de commande pour une machine à décharge électrique à fil de coupe selon la revendication 1 ou 2, où le moyen de commande de durée d'inactivité de décharge (16) commande la durée d'inactivité de décharge (OFFr) de façon à changer graduellement à partir d'une position à l'avant d'un point de départ de la partie d'angle d'arc circulaire d'une distance prédéterminée jusqu'au point de départ de la partie d'angle d'arc circulaire.

4. Le dispositif de commande pour une machine à décharge électrique à fil de coupe selon l'une quelconque des revendications 1 à 3, comprenant en outre un moyen de commande de volume de fluide (17) qui commande un volume de réfrigérant de sorte que le volume de réfrigérant fourni entre l'électrode en fil (4) et la pièce à usiner (5) augmente lorsque le rapport (Px/Ps) obtenu par le moyen de comparaison (9) augmente, tandis que le volume de réfrigérant est diminué lorsque le rapport diminue.

FIG. 1A

FIG. 1B

FIG. 2

EP 2 272 614 B1

13

## FIG. 3

MACHINING
ACCURACY
(DIMENSION
ERROR)

O

OFFSET

CIRCULAR ARC
RADIUS R

## FIG. 4

OFF TIME

OFFrmax

INCREASE

$OFFr = OFFs * (R_0/R)$

DECREASE

SAME CONTROL AS THAT
FOR STRAIGHT PORTION IS
PERFORMED WHEN $R > R_0$

$OFFs * (Ps/Px)$

OFFs

0

$R_0$

R

DISCHARGE QUIESCENT TIME (OFF TIME)
AS A FUNCTION OF CIRCULAR ARC RADIUS

14

## FIG. 5

MACHINING DIRECTION
→

A      B

R

C

4

## FIG. 6

OFF TIME

OFFrmax

OFFr

OFFmax

OFFs * (Ps/Px)

L

A     B     C    POSITION

OFF TIME
CONTROL FOR
STRAIGHT
PORTION

OFF TIME
CONTROL FOR
POSITION BEFORE
CIRCULAR ARC
CORNER PORTION

OFF TIME
CONTROL FOR
CIRCULAR ARC
CORNER
PORTION

OFF TIME
CONTROL FOR
STRAIGHT
PORTION

FIG. 7

UPPER NOZZLE FOR
SUPPLYING COOLANT

WIRE ELECTRODE

MACHINING SPEED     HIGH

MACHINING ENERGY     INTENSE

COOLANT VOLUME     LARGE

(OR COOLANT PRESSURE     HIGH)

⇓

DEFLECTION OF WIRE ELECTRODE     LARGE

VIBRATION OF WIRE ELECTRODE     LARGE

LOWER NOZZLE FOR
SUPPLYING COOLANT

FIG. 8

DISCHARGE
PULSE

STRAIGHT

WIRE
ELECTRODE

PROGRAMMED
MACHINING
LOCUS

MACHINING
LOCUS OF WIRE
ELECTRODE

16

FIG. 9A

WIRE DEFLECTS TOWARD INNER
SIDE OF CORNER DUE TO
REPULSIVE FORCE AGAINST
ELECTRIC DISCHARGE AND
CONVENTION OF COOLANT.

WIRE
ELECTRODE

CIRCULAR ARC

R: SMALL

FIG. 9B

WIRE
ELECTRODE

CIRCULAR ARC

R: LARGE

FIG. 10

MACHINING
ACCURACY
(DIMENSION
ERROR)

O          OFFSET                    CIRCULAR ARC
                                     RADIUS R

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1219373 A
- JP 2001162446 A
- JP 2002254250 A
- JP 2006130656 A
- JP 2000084743 A
- WO 200236295 A

- JP 63229228 A
- JP 1127226 A
- JP 2003165030 A
- JP 2006123036 A
- JP 63113607 A
- JP 63068323 A